# NEUE EUROPÄISCHE PATENTSCHRIFT

(11) **EP 0 320 948 B2**
(45) Veröffentlichungstag und Bekanntmachung des Hinweises auf die Entscheidung über den Einspruch: **19.06.1996**
(45) Hinweis auf die Patenterteilung: 16.10.1991
(21) Anmeldenummer: 88121030.6
(22) Anmeldetag: 15.12.1988
(51) Int. Cl.: F02C 7/08, F02C 6/20

(54) **Gasturbinenanlage**
Gas turbine plant
Turbine à gaz

(30) Priorität: 17.12.1987 DE 3742892
(43) Veröffentlichungstag der Anmeldung: 21.06.1989
(73) Patentinhaber: Bayerische Motoren Werke Aktiengesellschaft, 80788 München (DE)
(72) Erfinder: Rist, Dieter, Dr. Ing. habil., D-8000 München 2 (DE); Kappler, Günter, Prof. Dr.-Ing., D-8000 München 2 (DE)

(56) Entgegenhaltungen:
- DE-A- 2 618 025
- DE-A- 2 707 290
- DE-A- 3 132 130
- DE-B- 1 023 276
- DE-B- 2 628 269
- FR-A- 1 003 131
- GB-A- 719 775
- GB-A- 2 005 355
- US-A- 2 633 338
- US-A- 3 818 696
- US-A- 3 831 374
- P. Avran and S. Boudigues:" Ceramic turbine blades and heat exchangers; theory and experimental results", 1987 Tokyo International Gas Turbine Congress, pages I-163 to I-168

## Beschreibung

Die Erfindung bezieht sich auf eine Gasturbinenanlage der im Oberbegriff des ersten Anspruchs angegebenen Art.

Bei Gasturbinenanlagen ist es allgemein bekannt, zur Erhöhung des Wirkungsgrades die verdichtete Luft durch einen Wärmetauscher zu leiten, der von den Heißgasen nach der Turbine erwärmt wird. Dadurch steigt das Temperatumiveau der verdichteten Luft vor der Brennkammer an.

Weiterhin ist es allgemein bekannt, als Wärmetauscher einen Rekuperator zu verwenden. Dieser hat den Vorteil gegenüber den ebenfalls bekannten Regeneratoren, daß keine drehenden Teile vorhanden sind und deshalb keine aufwendige Dichtung zwischen den einzelnen Gasströmen vorgesehen werden muß. Andererseits haben Rekuperatoren den Nachteil, daß sie relativ großbauend sind, so daß sie das Einbauvolumen der Gasturbinenanlage vergrößern.

Aus der GB-A-2005355 ist eine gattungsbildende Gasturbinenanlage bekannt. Dort umschließt der ringförmige Wärmetauscher sowohl den Verdichter, als auch das Untersetzungsgetriebe, die Turbinen und zum großen Teil auch die Brennkammer. Zudem ist die Wärmetauscher Längsachse koaxial zur Längsachse der Brennkammer angeordnet

Diese Anordnung hat den Nachteil, daß das Untersetzungsgetriebe aufgrund der gewählten Ausbildung des Wärmetauschers innerhalb der Heißzone liegt und damit ebenfalls sehr starken Temperaturbelastungen ausgeliefert ist. Auch ist die Anordnung des Wärmetauschers so gewählt, daß eine hohe Wärmeabstrahlung nach außen auftritt. Aus diesem Grund istdie gesamte Anlage von einem Isolationsmaterial in einem separaten Gehäuse umschlossen.

Aus der US-A-3,831,374 ist eine Gasturbinenanlage bekannt, bei welcher ein koaxial zur Brennkammerlängsachse angeordneter Wärmetauscher vorgesehen ist. Dieser Wärmetauscher umschließt nur die Heißteile der Gasturbinenanlage. Ein Untersetzungsgetriebe ist hier nicht vorgesehen, so daß der Fachmann auch keine Anregung erhält, wie er dies anordnen soll.

Aufgabe der vorliegenden Erfindung ist es, eine Gasturbinenanlage der eingangs genannten Art, welches sich für einen Fahrzeugantrieb eignet, derart weiterzubilden, daß zum einen eine ausreichende Wärmeisolation gegeben ist und zum anderen die Standfestigkeit der Teile erhöht wird.

Diese Aufgabe wird erfindungsgemäß durch die Merkmale des ersten Anspruchs gelõst. Durch das Ineinanderlegen von Brennkammer und Wärmetauscher sowie das Umgeben des Wärmetauschers von der Zufuhrleitung für die verdichtete Luft, wird die Gesamtanlage nach außen isoliert, so daß die Verlustwärme der Brennkammer weitgehendst in der Gasturbinenanlage verbleibt und somit nutzbringend angewendet werden kann. Außerdem wird dadurch ohne zusätzliche Mittel eine Wärmeisolation nach außen erzielt Deshalb eignet sich eine derart aufgebaute Anlage auch sehr gut zum Einbau in Kraftfahrzeuge. Da erfindungsgemäß das Untersetzungsgetriebe herausgenommen wird aus der Wärmetauscheranordnung, ist dadurch sichergestellt, daß dieses Getriebe wärmemäßig nicht überlastet wird und damit konstruktiv einfacher herzustellen ist. Dadurch wird auch die Lebensdauer des Untersetzungsgetriebes wesentlich erhöht. Zugleich ist damit eine wirksame Kühlung des Untersetzungsgetriebes möglich.

Ein weiterer Vorteil der Anordnung besteht darin, daß der Wärmetauscher mit der von außen herumgeführten Luftleitung als Schalldämmkörper für die lautesten abschnitte der Gasturbinenanlage fungieren kann.

Einen bevorzugten Aufbau des Wärmetauschers beschreibt Anspruch 2. Einen besonders kompakten Wärmetauscher erzielt man insbesondere dann, wenn mindestens zwei Rohre ineinander geschoben werden und die einzelnen Rohrpaare auf konzentrischen Kreisen angeordnet werden.

Dieser Wärmetauscheraufbau ist ganz allgemein bekannt aus dem Aufsatz "Ceramic Turbine Blades and Heat Exchangers Theory and Experimental Results" von P. Avran and S. Boudigues, verteilt auf dem Tokyo International Gas Turbine Congress vom 26. bis 31. Oktober 1987.

Im folgenden wird die Erfindung anhand eines bevorzugten Ausführungsbeispiels näher erläutert. Es stellen dar:
- Fig. 1: eine schematisierte Längsansicht einer Gasturbinenanlage ;
- Fig. 2: eine Teilstirnansicht des erfindungsgemäß aufgebauten Rekuperators ;
- Fig. 3: eine vergrößerte Ansicht eines Rekuperatorelementes.

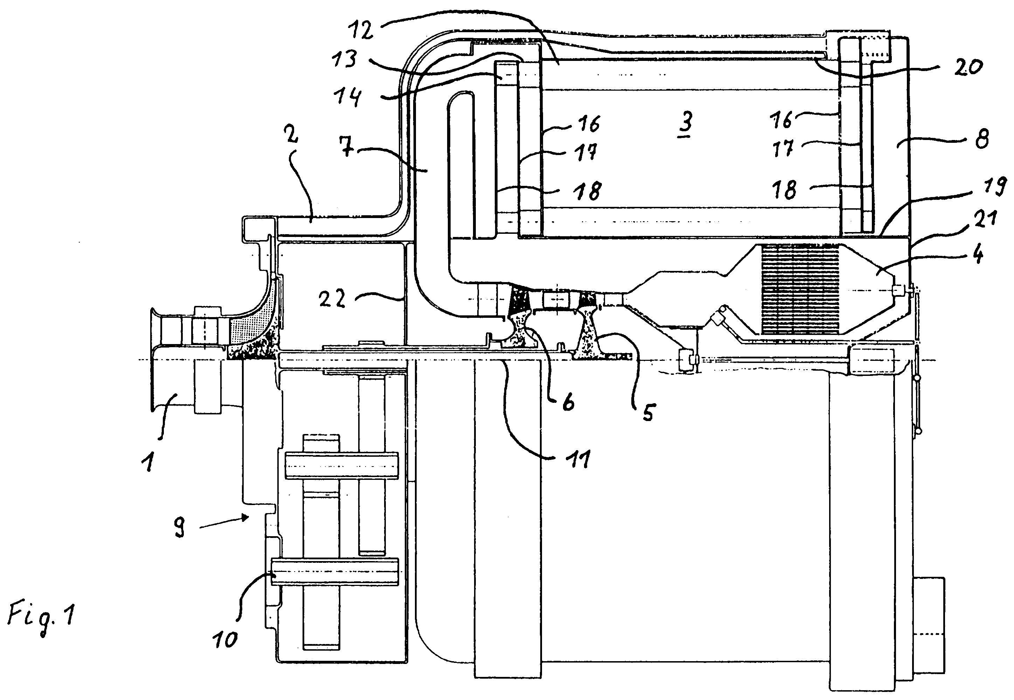

Die Gasturbinenanlage besteht - wie allgemein üblich - aus einem Verdichter 1, der Umgebungsluft ansaugt und verdichtet über eine Leitung 2 zu einem ringförmigen Rekuperator 3 führt, der nach dem Gegenstromprinzip arbeitet. Diesen durchströmt die verdichtete Luft und wird hierbei von den Heißgasen erwärmt. Die so erwärmte verdichtete Luft gelangt zu einer Ringbrennkammer 4, die als Zweistufenringbrennkammer aufgebaut ist Die dort entstehenden Heißgase strömen aus dem Brennkammerauslaß in die Verdichterturbine 5 und die Nutzturbine 6. Von dort aus gelangen die Heißgase über die ebenfalls ringförmige Leitung 7 zu dem Rekuperator 3, den sie über die Leitung 8 verlassen. Im Anschluß an die Leitung 8 können übliche Schalldämpfereinrichtungen vorgesehen werden. Zur besseren Übersicht wurden die Umlaufkanten in Fig. 1 weggelassen.

Die Nutzturbine 6 ist mit einem Untersetzungsgetriebe 9 verbunden, an deren Ausgangswelle 10 - bei Verwendung der Gasturbinenanlage als Fahrzeugantrieb-ein Fahrgetriebe angeordnet ist.

Die gesamte Gasturbinenanlage ist mit ihren einzelnen Elementen konzentrisch um eine gemeinsame zentrale Längsachse 11 angeordnet. Auf dieser gemeinsamen Längsachse liegen die Wellen des Verdichters 1 und der beiden Turbinen 5 und 6 sowie die Längsachse der Ringbrennkammer 4 und des sie umschließenden Rekuperators 3.

Wie die Anordnung deutlich zeigt, umschließt der Rekuperator 3 zylinderförmig sowohl die Brennkammer 4 als auch die Verdichterturbine 5 und die Nutzturbine 6. Damit wirkt er zum einen als Wärmeisolator für die heißesten Teile der Gasturbinenanlage. Zum anderen kann er als Berstschutz, insbesondere für die beiden Turbinenlaufräder, fungieren. Aufgrund dieser Anordnung sind die Übergangskanäle vom Turbinenaustritt zum Wärmetauschereintritt relativ kurz und können mit sehr geringem Bauaufwand so gestaltet werden, daß die Strömungsverzögerungen jeweils mit relativ geringen Verlusten behaftet sind. Die Wärmeisolation nach außen kann mit dieser Anordnung ebenfalls erzielt werden, wenn die Leitung 2 im Bereich des Rekuperators 3 ringförmig ausgebildet wird und so gleichsam als Zylinder oder Teilzylinder den Rekuperator von außen umschließt.

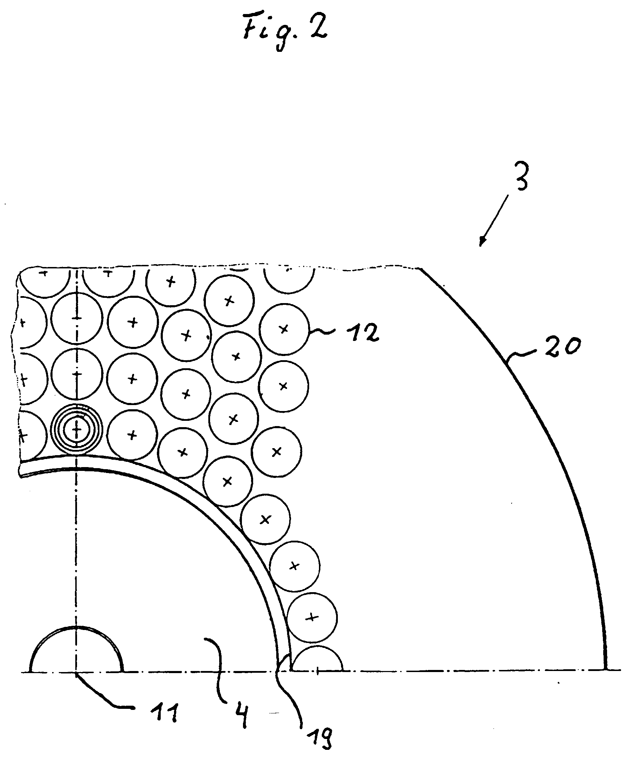

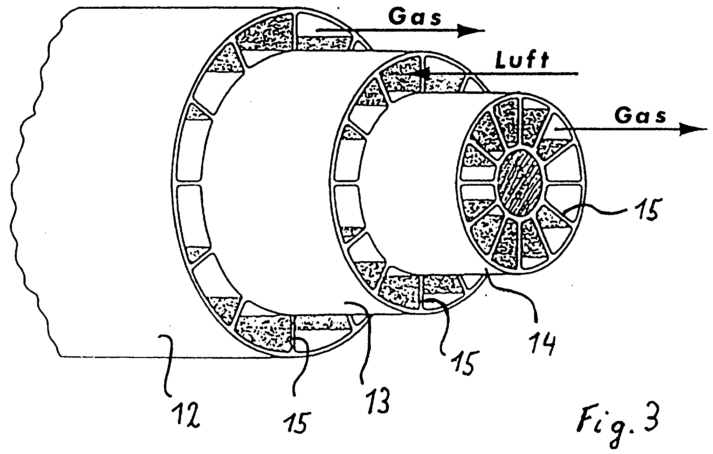

Der Rekuperator 3 selbst ist als Gegenstromwärmetauscher ausgebildet und weist eine Vielzahl dünnwandiger Rohre 12, 13 und 14 aus Keramik mit gestuften Durchmessem auf (Fig. 2, 3). Wie insbesondere Fig. 2 deutlich zeigt, sind die einzelnen Rohre 12-14 mit ihren Längsachsen koaxial und innerhalb des Rekuperators 3 auf konzentrischen Kreisen zu dessen Längsachse 11 angeordnet. Dadurch entsteht eine sehrdichte Bauart bei ausreichend großen Wärmetauscherkontaktflächen. Die einzelnen Rohre 12-14 werden untereinander über Innenstege 15 gehalten. Damit ist der Rekuperator 3 aufgebaut aus einer Vielzahl von zylinderförmigen Rohren (Multizylinder), die wiederum jeder für sich aus drei ineinandergeschobenen Einzelrohren bestehen.

Eine Endansicht solcher drei Einzelrohre 12-14 zeigt Fig. 3. Hierbei dient das Rohr 14 sowie der verbleibende Ringspalt zwischen dem Rohraußendurchmesser 13 und dem Rohrinnendurchmesser 12 zur Führung der Heißgase nach deren Verlassen der Nutzturbine. Der Ringspalt zwischen dem Rohraußendurchmesser des Rohres 14 und dem Rohrinnendurchmesser des Rohres 13 dient zur Führung der verdichteten, zu erwärmenden Luft.

Um diese einzelnen Rohre in dem Rekuperator 3 zu halten, sind sie neben ihrerAbstufung im Durchmesser auch noch in ihren Längen abgestuft (Fig. 3). Zum Halten der einzelnen Rohre sind jeweils in ihrem Endbereich Haltescheiben 16, 17 und 18 vorgesehen, in denen sie dicht und elastisch befestigt sind. Diese Haltescheiben wirken gleichsam als Membran, so daß sie die auftretenden Wärmedehnungen problemlos zulassen können, ohne Spannungsspitzen auf der Rohr- oder Haltescheibenseite zu verursachen. Außerdem wird dadurch evtl. Leckluft an den Füge- und Montagestellen der Brennkammer zugeführt und strömt nicht als Verlust ins Freie oder zu Stellen der Gasturbinenanlage hin, wo sie deren Funktion beeinträchtigen kann.

Aufgrund der gestuften Länge der Rohre werden zwischen den einzelnen Haltescheiben Sammel- bzw. Verteilkanäle gebildet, die zum Zuführen und Abführen des Heißgases bzw. der zu erwärmenden Luft dienen können.

Selbstverständlich besitzt der Rekuperator 3 neben den Haltescheiben noch Innen- und Außenwände 19 und 20 (Fig. 3). Dadurch können zusätzliche Führungskanäle für die verdichtete, erwärmte Luft vom Rekuperator 3 zur Brennkammer 4 vermieden werden, wenn im Bereich der Stimseite der Brennkammer und im Bereich der Turbinen (Verdichterturbine 5 oder Nutzturbine 6) ebenfalls eine Abschlußwand - in Fig. 1 mit 21 und 22 bezeichnet - vorgesehen wird. Die Abschlußwand im Bereich der Turbinen kann auch durch die ringförmige Heißgas-Leitung 7 ersetzt werden.

## Patentansprüche

1. Gasturbinenanlage mit mindestens einem Verdichter (1), einer Ringbrennkammer (4), mindestens einer Verdichterturbine (5) und einer Nutzturbine (6) und einem nur die Heißteile der Gasturbinenanlage, d.h. sowohl die Brennkammer (4) als auch die beiden Turbine (5, 6), umschließenden ringförmigen Rekuperator (3) als Wärmetauscher für die verdichtete Luft, wobei die Rekuperator-Längsachse koaxial zur Längsachse (11) der Brennkammer (4) angeordnet ist und auf dieser Längsachse (11) die Wellen des Verdichters (1) und der beiden Turbinen (5, 6) sowie die Längsachse der Ringbrennkammer (4) liegen und mit einem zwischen dem Verdichter (1) und den beiden Turbinen (5, 6) angeordneten Untersetzungsgetriebe (9),
dadurch gekennzeichnet, daß die Leitung (2) zwischen dem Verdichter (1) und dem Rekuperator (3) für die verdichtete Luft den Rekuperator (3) ringförmig von außen zumindest teilweise umschließt und daß das Untersetzungsgetriebe (9) außerhalb des Rekuperators vorgesehen ist.

2. Gasturbinenanlage nach Anspruch 1,
dadurch gekennzeichnet, daß der Rekuperator (3) aus einer Vielzahl dünnwandiger, koaxial angeordneter kreisförmiger Rohre (12, 13, 14) aus Keramik besteht.

## Claims

1. A gas turbine plant comprising at least one compressor (1), an annular combustion chamber (4), at least one compressor turbine (5) and a work turbine (6), and an annular recuperator (3) surrounding only the hot parts of the gas turbine plant, that is to say the combustion chamber (4) as well as the two turbines (5, 6), and serving as a heat exchanger for the compressed air, the longitudinal axis of the recuperator being disposed coaxially with the longitudinal axis (11) of the combustion chamber (4) and the shafts of the compressor (1) and of the two turbines (5, 6), as well as the longitudinal axis of the annular combustion chamber (4), lying on this longitudinal axis (11), and with a step-down gear (9) being disposed between the compressor (1) and the two turbines (5, 6), characterised in that the duct (2) between the compressor (1) and the recuperator (3) for the compressed air at least partly surrounds the recuperator (3) in an external circuit, and the step-down gear (9) is provided outside the recuperator (3).

2. A gas turbine plant according to claim 1, characterised in that the recuperator (3) comprises a number of thin-walled coaxially-disposed circular ceramic tubes (12, 13, 14).

## Revendications

1. Installation de turbine à gaz avec au moins un compresseur (1), une chambre annulaire de combustion (4), au moins une turbine de compression (5) et une turbine d'utilisation (6) et un récupérateur (3) en forme d'anneau, contenant les seules parties chaudes de l'installation de turbine à gaz (c'est-à-dire à la fois la chambre de combustion (4) et les turbines (5, 6)), et servant d'échangeur de chaleur pour l'air comprimé, l'axe longitudinal du récupérateur coïncidant avec l'axe longitudinal (11) de la chambre de combustion (4), l'axe du compresseur (1) et les deux turbines (5, 6) ainsi que l'axe longitudinal de la chambre de combustion annulaire (4) étant situés sur cet axe longitudinal (11), un démultiplicateur (9) étant placé entre le compresseur (1) et les deux turbines (5, 6),
installation caractérisée en ce que la conduite (2) prévue entre le compresseur (1) et le récupérateur (3) pour l'air comprimé, entoure de l'extérieur, au moins en partie le récupérateur en forme d'anneau et le démultiplicateur de vitesse (9) est à l'extérieur du récupérateur (3).

2. Installation de turbine à gaz selon la revendication 1, caractérisée en ce que le récupérateur (3) est constitué par un grand nombre de tubes circulaires concentriques en céramique, à paroi mince (12, 13, 14).
